# EUROPEAN PATENT SPECIFICATION

(11) **EP 3 263 727 B1**
(45) Date of publication and mention of the grant of the patent: **15.04.2020**
(21) Application number: 15883093.5
(22) Date of filing: 21.12.2015
(51) Int. Cl.: C22C 38/00, C21D 9/46, C22C 38/14, C22C 38/58, C21D 6/00, C21D 8/02, C22C 38/02, C22C 38/04, C22C 38/06, C22C 38/08, C22C 38/12, C22C 38/16, C22C 38/26, C22C 38/28, C22C 38/34, C22C 38/38, B32B 15/01

(54) **HIGH-STRENGTH COLD-ROLLED STEEL PLATE AND METHOD FOR PRODUCING SAME**
HOCHFESTE KALTGEWALZTE STAHLPLATTE UND VERFAHREN ZUR HERSTELLUNG DAVON
TÔLE EN ACIER LAMINÉE À FROID HAUTEMENT RÉSISTANTE, ET PROCÉDÉ DE FABRICATION DE CELLE-CI

(30) Priority: 27.02.2015 JP 2015038507
(43) Date of publication of application: 03.01.2018
(73) Proprietor: JFE Steel Corporation, Tokyo 100-0011 (JP)
(72) Inventor: TAKASHIMA, Katsutoshi, Tokyo 100-0011 (JP); FUNAKAWA, Yoshimasa, Tokyo 100-0011 (JP)
(74) Representative: Haseltine Lake Kempner LLP
(86) International application number: PCT/JP2015/006346
(87) International publication number: WO 2016/135793

(56) References cited:
- JP-A- 2010 090 432
- JP-A- 2010 106 323
- JP-A- 2011 111 671
- JP-A- 2011 111 671
- JP-A- 2011 111 675
- JP-A- 2011 111 675
- JP-A- 2012 012 642
- JP-A- 2013 104 113
- JP-A- 2014 080 665
- US-A1- 2014 147 329

## Description

### Technical Field

The present invention relates to a high-strength cold-rolled steel sheet and a method for manufacturing the steel sheet, and in particular, to a high-strength cold-rolled steel sheet which can preferably be used for structural parts of, for example, an automobile.

### Background Art

Nowadays, since CO₂ emission regulations are being tightened due to increasing concern about environmental problems, the weight reduction of an automobile body for increasing fuel efficiency is an issue to be addressed in the automobile field. Therefore, since there has been progress in reducing the thickness of automobile parts by using a high-strength steel sheet for automobile parts, there is a growing trend toward using a steel sheet having a tensile strength (TS) of 1150 MPa or more. Also, a high-strength steel sheet which is used for the structural members and reinforcing members of an automobile is required to have excellent formability. In particular, when parts having a complex shape are formed, such a steel sheet is required to be excellent in terms of elongation property. In addition, in the case of a steel sheet having a tensile strength (TS) of 1150 MPa or more, there may be a problem in that delayed fracturing (hydrogen embrittlement) occurs due to hydrogen entering from a usage environment. Therefore, a high-strength cold-rolled steel sheet is required to be excellent in terms of press formability (hereinafter, also simply referred to as "formability") and delayed fracturing resistance.

Conventionally, a dual-phase steel (DP steel) sheet which has a multi-phase microstructure composed of ferrite and martensite is known as a high-strength cold-rolled steel sheet having both excellent formability and high strength. For example, Patent Literature 1 proposes a cold-rolled steel sheet having a strength-ductility balance represented by a product (TS × El) of tensile strength (TS) and elongation (El) of 17000 MPa·% or more which is obtained by performing recrystallization annealing at a temperature equal to or higher than the A₃ transformation temperature on a cold-rolled steel sheet whose A₁ transformation temperature and A₃ transformation temperature are controlled by optimizing the contents of Ti, Nb, Mn, and Ni in the chemical composition of steel in order to form a fine microstructure including mainly fine ferrite having an average crystal grain diameter of 3.5 µm or less. In addition, Patent Literature 2 proposes a Zn-Al-Mg alloy coated steel sheet having a tensile strength (TS) of 590 MPa or more and excellent local ductility which is obtained by adding Ti in an amount of 0.08 mass% or more and by forming a steel microstructure including ferrite and martensite, and a method for manufacturing the steel sheet. Other previously proposed arrangements are disclosed in JP2011111675A and JP2011111671A.

### Citation List

### Patent Literature

PTL 1: Japanese Patent No. 4911122
PTL 2: Japanese Unexamined Patent Application Publication No. 2010-235989

### Summary of Invention

### Technical Problem

However, in the case of the technique according to Patent Literature 1, although the technique is effective in the case of steel having a microstructure including martensite in an amount of 35% or less in terms of area ratio, in the case of steel having a microstructure including martensite in an amount of more than 35% in terms of area ratio in order to increase tensile strength (TS) to a higher degree, since martensite having coarse grains which are formed as a result of martensite grains combining with each other when annealing is performed in a γ single phase region is retained after annealing has been performed, it is not possible to realize sufficient effect of crystal grain fining, which makes it impossible to achieve high ductility (elongation). Moreover, in the case of the technique according to Patent Literature 2, although there is an example having a tensile strength (TS) of 1150 MPa or more, it is not possible to achieve sufficient elongation with which it is possible to perform press forming in order to obtain a complex shape. In addition, since there is no mention of delayed fracturing resistance in Patent Literature 1 or Patent Literature 2, the technique according to Patent Literature 1 or Patent Literature 2 does not satisfy necessary and sufficient condition which is required for an automotive steel sheet, because an increase in strength is accompanied by a risk of delayed fracturing occurring due to hydrogen entering from a natural environment, for example, when the steel sheet is used for an automobile.

As described above, in the case of a conventional high-strength steel sheet having a tensile strength (TS) of 1150 MPa or more, since it is difficult to achieve excellent delayed fracturing resistance while achieving a sufficient elongation for excellent formability, it is a fact that a steel sheet which is fully satisfactory in terms of these properties (tensile strength, elongation, and delayed fracturing resistance) has not yet been developed.

Therefore, an object of the present invention is, by solving the problems with the conventional techniques described above, to provide a high-strength cold-rolled steel sheet excellent in terms of elongation and delayed fracturing resistance and a method for manufacturing the steel sheet.

### Solution to Problem

The present inventors diligently conducted investigations, and, as a result, found that, in order to increase elongation and delayed fracturing resistance, it is possible to achieve excellent elongation and delayed fracturing resistance by adding specified amounts of Ti and/or Nb, by controlling the volume fractions of ferrite, tempered martensite, and non-recrystallized ferrite in a steel sheet microstructure in specified proportions, and by finely making crystal grains of the steel sheet microstructures. The present invention has been completed based on the knowledge described above.

Increasing the volume fraction of soft ferrite is important for achieving sufficient elongation. On the other hand, the existing of hard martensite is necessary for achieving a tensile strength (TS) of 1150 MPa or more. However, in the case where there is an increase in the volume fraction of martensite, since martensite grains combine with each other so that ferrite grains are isolated (surrounded), ferrite cannot sufficiently contribute to an increase in ductility. In order to solve this problem, it is important that martensite grains be prevented from combining with each other so that martensite grains are isolated. In addition, in the case where the volume fraction of martensite, which has a high dislocation density, is high when hydrogen enters a steel sheet, since there is an increase in crack growth rate inside the martensite grains and at interfaces between ferrite and martensite, there is deterioration in delayed fracturing resistance.

Therefore, the present inventors diligently conducted investigations, and, as a result, found that, in order to achieve a tensile strength (TS) of 1150 MPa or more, the hardness of martensite is sufficiently increased by adding a specified amount of C, that satisfactory elongation is achieved by preventing martensite grains from combining with each other through the control of the volume fraction of tempered martensite as a result of adding Ti and/or Nb in order to finely make crystal grains of ferrite and martensite, and that fine carbides of Ti and/or Nb contribute to an improvement in delayed fracturing resistance as a result of such carbides functioning as the trap sites of hydrogen. Since the fine carbides of Ti and/or Nb not only have an influence on the trap sites of hydrogen but also increase the hardness of ferrite, such carbides also have a function of improving tensile strength (TS). In addition, it was found that performing heating to an annealing temperature at an optimized heating rate makes crystal grains fine, which results in an improvement in elongation and delayed fracturing resistance. Moreover, it was found that, in the case where the volume fraction of non-recrystallized ferrite is equal to or less than a specified value, it is possible to improve strength without causing any negative influence on elongation or delayed fracturing resistance.

The present invention has been completed based on the knowledge described above, and the subject matter of the present invention is as follows.
[1] A high-strength cold-rolled steel sheet having
   a chemical composition containing, by mass%, C: 0.16% to 0.30%, Si: 1.2% to 2.2%, Mn: 1.5% to 2.5%, P: 0.05% or less, S: 0.005% or less, Al: 0.10% or less, N: 0.007% or less, at least one of Ti and Nb, optionally B: 0.010% or
   less, optionally one or more selected from V: 0.50% or less, Cr: 0.50% or less, Mo: 0.50% or less, Cu: 0.50% or less, Ni: 0.50% or less, Ca: 0.0050% or less, and REM: 0.0050% or less and the balance being Fe and inevitable impurities, in which Ti + Nb is 0.04% to 0.15%, and
   a multi-phase microstructure including ferrite having an average crystal grain diameter of 2.5 µm or less in an amount of 45% to 65% in terms of volume fraction, tempered martensite having an average crystal grain diameter of 2 µm or less in an amount of 35% to 55% in terms of volume fraction, and non-recrystallized ferrite having an average crystal grain diameter of 5 µm or less in an amount of 5% or less (including 0%) in terms of volume fraction, the high - strength cold - rolled steel sheet having a tensile strength of 1150 MPa or more and an elongation of 15, 0 % or more, wherein the average crystal grain diameters of ferrite, tempered martensite, and non-recrystallized ferrite is determined by calculating the circle equivalent diameters of these phases from a steel sheet microstructure photograph and by calculating the average values of the circle-equivalent diameters.
[2] A method for manufacturing the high-strength cold-rolled steel sheet according to any one of item [1] above, the method including
   performing hot rolling on a steel slab with a finishing temperature of 850°C to 950°C in order to obtain a hot-rolled steel sheet,
   starting cooling on the hot-rolled steel sheet within one second after the hot rolling has beenfinished,
   performing first cooling to a first cooling stop temperature of 600°C to 700°C at a first average cooling rate of 80°C/s or more,
   performing second cooling to a second cooling stop temperature of 620°C or lower at a second average cooling rate of 5°C/s or more,
   then coiling the hot-rolled steel sheet,
   subsequently cold-rolling in order to obtain a cold-rolled steel sheet, and
   performing continuous annealing on the cold-rolled steel sheet,
   the continuous annealing including
   heating the steel sheet to a temperature of 250°C to 350°C,
   then heating the steel sheet to a temperature of 660°C at a first average heating rate of 5°C/s to 25°C/s,
   then heating the steel sheet to a temperature of 680°C to 750°C at a second average heating rate of 10°C/s or less,
   holding the steel sheet at a first soaking temperature of 680°C to 750°C for 180 seconds or more,
   then performing third cooling to a third cooling stop temperature of 650°C to 720°C at a third average cooling rate of 1°C/s or more,
   then performing fourth cooling to a fourth cooling stop temperature of 100°C or lower at a fourth average cooling rate of 100°C/s to 1000°C/s, and
   subsequently holding the steel sheet at a second soaking temperature of 100°C to 250°C for 120 seconds to 1800 seconds.

In the present invention, the term "a high-strength cold-rolled steel sheet" refers to a cold-rolled steel sheet having a tensile strength (TS) of 1150 MPa or more.

In addition, in the present invention, the term "delayed fracturing" refers to delayed fracturing which is caused by hydrogen entering a member after a steel sheet has been subjected to forming work in order to obtain the member.

In addition, in the present invention, the terms "a first average cooling rate" through "a fourth average cooling rate" respectively refer to values calculated by dividing the differences between the cooling start temperatures and the cooling stop temperatures by cooling times in the first cooling through the fourth cooling. In addition, the terms "a first average heating rate" and "a second average heating rate" respectively refer to values calculated by dividing the difference between the heating stop temperatures and the heating start temperatures by heating times.

### Advantageous Effects of Invention

According to the present invention, it is possible to obtain a high-strength cold-rolled steel sheet having a tensile strength (TS) of 1150 MPa or more and a high elongation which is accompanied by excellent formability. In addition, this high-strength cold-rolled steel sheet has excellent delayed fracturing resistance. According to the present invention, it is possible to stably obtain a high-strength cold-rolled steel sheet excellent in terms of elongation and delayed fracturing resistance in which fracturing does not occur for 100 hours, for example, when it is immersed in hydrochloric acid having a temperature of 25°C and a pH of 1 under a stress corresponding to an elongation of 15.0% or more.

### Description of Embodiments

Hereafter the present invention will be specifically described. The high-strength cold-rolled steel sheet according to the present invention has a chemical composition containing, by mass%, C: 0.16% to 0.30%, Si: 1.2% to 2.2%, Mn: 1.5% to 2.5%, P: 0.05% or less, S: 0.005% or less, Al: 0.10% or less, N: 0.007% or less, at least one of Ti and Nb, optionally B: 0.010% or less, optionally one or more selected from V: 0.50% or less, Cr: 0.50% or less, Mo: 0.50% or less, Cu: 0.50% or less, Ni: 0.50% or less, Ca: 0.0050% or less, and REM: 0.0050% or less, and the balance being Fe and inevitable impurities, in which Ti + Nb is 0.04% to 0.15%, and a multi-phase microstructure including ferrite having an average crystal grain diameter of 2.5 µm or less in an amount of 45% to 65% in terms of volume fraction, tempered martensite having an average crystal grain diameter of 2 µm or less in an amount of 35% to 55% in terms of volume fraction, and non-recrystallized ferrite having an average crystal grain diameter of 5 µm or less in an amount of 5% or less in terms of volume fraction.

First, the reasons for the limitations on the chemical composition of the high-strength cold-rolled steel sheet according to the present invention will be described. Hereinafter, "%" used when describing a chemical composition shall refer to "mass%".

### C: 0.16% to 0.30%

C is a chemical element which is effective for increasing the strength of a steel sheet, which also contributes to the formation of tempered martensite, that is, a second phase in the present invention, and which increases the hardness of tempered martensite. In the case where the C content is less than 0.16%, since it is difficult to increases the hardness of tempered martensite. In the case where the C content is less than 0.16%, since it is difficult to control the volume fraction of tempered martensite to be 35% or more, it is difficult to achieve a tensile strength (TS) of 1150 MPa or more. Therefore, the C content is set to be 0.16% or more, or preferably 0.20% or more. On the other hand, in the case where the C content is more than 0.30%, since there is an increase in the volume fraction and hardness of tempered martensite, it is not possible to achieve sufficient elongation or sufficient delayed fracturing resistance. Therefore, the C content is set to be 0.30% or less, or preferably 0.26% or less.

Here, in the present invention, the term "a second phase" described above refers to a phase which is different from ferrite, and the meaning of the term "a second phase" includes tempered martensite. In addition, in this second phase, bainite, retained austenite, and pearlite may be included.

### Si: 1.2% to 2.2%

Si increases the strength of ferrite through solid solution strengthening. In the case where the Si content is less than 1.2%, it is not possible to achieve a tensile strength (TS) of 1150 MPa or more while controlling the more. On the other hand, in the case where the Si content is more than 2.2%, since rolling is performed in a mixed region of ferrite and austenite when hot rolling is performed, there is an increase in crystal grain diameter, which makes it impossible to achieve sufficient elongation. Therefore, the Si content is set to be 2.2% or less, or preferably 2.0% or less.

### Mn: 1.5% to 2.5%

Mn is a chemical element which contributes to an increase in strength through solid solution strengthening and by facilitating the formation of the second phases and which stabilizes austenite. In the case where the Mn content is less than 1.5%, it is not possible to control the volume fraction of tempered martensite to be 35% or more while achieving the desired volume fraction of austenite when annealing is performed. Therefore, the Mn content is set to be 1.5% or more. On the other hand, in the case where the Mn content is more than 2.5%, there is a decrease in elongation due to the volume fraction of tempered martensite being more than 55%, and, in the case where hydrogen enters a steel sheet, since there is an increase in the degree of slip constraint, a crack tends to grow at the grain boundaries, which results in deterioration in delayed fracturing resistance. Therefore, the Mn content is set to be 2.5% or less, or preferably 2.3% or less.

### P: 0.05% or less

Although P contributes to an increase in strength through solid solution strengthening, in the case where the P content is more than 0.05%, since the grain boundary embrittlement occurs due to significant grain boundary segregation of P, there is deterioration in delayed fracturing resistance. Therefore, the P content is set to be 0.05% or less, or preferably 0.04% or less.

### S: 0.005% or less

In the case where the S content is more than 0.005%, since there is an increase in the number of sulfides such as MnS, which become the starting points of the crack of delayed fracturing, there is deterioration in delayed fracturing resistance. Therefore, the S content is set to be 0.005% or less, or preferably 0.004% or less. On the other hand, although there is no particular limitation on the lower limit of the S content, there is an increase in steel-making costs in order to control the S content to be very small, that is, less than 0.0002%. Therefore, it is preferable that the S content be 0.0002% or more.

### Al: 0.10% or less

Although Al is a chemical element which is necessary for deoxidation, in the case where the Al content is more than 0.10%, this deoxidation effect becomes saturated. Therefore, the Al content is set to be 0.10% or less, or preferably 0.08% or less. On the other hand, in order to realize this deoxidation effect, it is preferable that the Al content be 0.01% or more.

### N: 0.007% or less

Since N deteriorates delayed fracturing resistance by forming coarse nitrides, which become the starting points in the vicinity of the crack of delayed fracturing, it is necessary to decrease the N content. In the case where the N content is more than 0.007%, it is not possible to achieve the desired delayed fracturing resistance. Therefore, the N content is set to be 0.007% or less, or preferably 0.005% or less.

### Containing at least one of Ti and Nb, in which Ti + Nb is 0.04% to 0.15%

Ti is a chemical element which can contribute an increase in strength by forming fine carbonitrides. In addition, since there is an increase in the recrystallization temperature of a steel sheet as a result of Ti being precipitated in the form of TiC during heating in an annealing process, austenite is formed from non-recrystallized worked ferrite in an annealing process, which results in significantly making a fine steel microstructure. However, in the case where the Ti content is less than 0.04%, such an effect is small, and there is deterioration in the balance between tensile strength (TS) and elongation (El), which is represented by the product of tensile strength and elongation, due to the formation of an inhomogeneous microstructure. Moreover, since there is an insufficient function as the trap sites for hydrogen, there is deterioration in delayed fracturing resistance. Therefore, at least one of Ti and Nb should be added, and, in the case where Ti is added, the Ti content is set to be 0.04% or more. On the other hand, in the case where the Ti content is more than 0.15%, since the effect of the steel microstructure fining becomes saturated, and since coarse carbides which do not contributes to the steel microstructure fining or to an increase in strength are retained after slab heating has been performed, the balance between tensile strength (TS) and elongation (El), which is represented by the product of tensile strength and elongation is deteriorated. Therefore, at least one of Ti and Nb should be added, and, in the case where Ti is added, the Ti content is set to be 0.15% or less.

Also, Nb is a chemical element which can contribute an increase in strength by forming fine carbonitrides. In addition, since there is an increase in the recrystallization temperature of a steel sheet as a result of Nb being precipitated in the form of NbC during heating in an annealing process, austenite is formed from non-recrystallized worked ferrite in an annealing process, which significantly makes a fine steel microstructure. However, in the case where the Nb content is less than 0.04%, such an effect is small, and there is deterioration in the balance between tensile strength (TS) and elongation (El), which is represented by the product of tensile strength and elongation, due to the formation of an inhomogeneous microstructure. Moreover, since there is an insufficient function as the trap sites of hydrogen, there is a decrease in delayed fracturing resistance. Therefore, at least one of Ti and Nb should be added, and, in the case where Nb is added, the Nb content is set to be 0.04% or more. On the other hand, in the case where the Nb content is more than 0.15%, since the effect of the steel microstructure fining becomes saturated, and since coarse carbides, which do not contributes to the effect of the steel microstructure fining or to an increase in strength, are retained after slab heating has been performed, the balance between tensile strength (TS) and elongation (El), which is represented by the product of tensile strength and elongation is deteriorated. Therefore, at least one of Ti and Nb should be added, and, in the case where Nb is added, the Nb content is set to be 0.15% or less.

The remainder except the constituent chemical elements described above is Fe and inevitable impurities. Examples of the inevitable impurities include Sb, Sn, Zn, and Co, and the acceptable ranges of the contents of these chemical elements are respectively Sb: 0.01% or less, Sn: 0.10% or less, Zn: 0.01% or less, and Co: 0.10% or less. In addition, even in the case where Ta, Mg, and Zr are added in amounts within the ranges which are common among ordinary steel chemical compositions, there is no decrease in the effects of the present invention.

In addition, in the present invention, one, two, or more of the following chemical elements may be added in addition to the constituent chemical elements described above.

### B: 0.010% or less

Since B contributes to an increase in strength by increasing hardenability and by facilitating the formation of the second phases, B may be added as needed. In order to realize such an effect, it is preferable that the B content be 0.0003% or more. On the other hand, in the case where the B content is more than 0.010%, such an effect becomes saturated. Therefore, in the case where B is added, it is preferable that the B content be 0.010% or less, or more preferably 0.005% or less.

### V: 0.50% or less

Since V contributes to an increase in strength by forming fine carbonitrides, V may be added as needed. In order to realize such an effect, it is preferable that the V content be 0.01% or more. On the other hand, in the case where the V content is large, the effect of increasing strength is small with the V content exceeding 0.50%, and there is an increase in alloy cost. Therefore, in the case where V is added, it is preferable that the V content be 0.50% or less.

### Cr: 0.50% or less

Since Cr is a chemical element which contributes to an increase in strength by facilitating the formation of the second phases, Cr may be added as needed. In order to realize such an effect, it is preferable that the Cr content be 0.10% or more. On the other hand, in the case where the Cr content is more than 0.50%, an excessive amount of tempered martensite is formed. Therefore, in the case where Cr is added, it is preferable that the Cr content be 0.50% or less.

### Mo: 0.50% or less

Since Mo is a chemical element which contributes to an increase in strength by facilitating the formation of the second phases and by partially forming carbides, Mo may be added as needed. In order to realize such an effect, it is preferable that the Mo content be 0.05% or more. On the other hand, in the case where the Mo content is more than 0.50%, such an effect becomes saturated. Therefore, in the case where Mo is added, it is preferable that the Mo content be 0.50% or less.

### Cu: 0.50% or less

Since Cu is a chemical element which contributes to an increase in strength through solid solution strengthening and by facilitating the formation of the second phases, Cu may be added as needed. In order to realize such an effect, it is preferable that the Cu content be 0.05% or more. On the other hand, in the case where the Cu content is more than 0.50%, such an effect becomes saturated, and surface defects caused by Cu tend to occur. Therefore, in the case where Cu is added, it is preferable that the Cu content be 0.50% or less.

### Ni: 0.50% or less

Since Ni is, like Cu, a chemical element which contributes to an increase in strength through solid solution strengthening and by facilitating the formation of the second phases, Ni may be added as needed. In order to realize such an effect, it is preferable that the Ni content be 0.05% or more. In addition, in the case where Ni is added in combination with Cu, since Ni is effective for inhibiting surface defects caused by Cu from occurring, adding Ni is effective when Cu is added. On the other hand, in the case where the Ni content is more than 0.50%, such effects become saturated. Therefore, in the case where Ni is added, it is preferable that the Ni content be 0.50% or less.

### Ca: 0.0050% or less

Since Ca contributes to reducing the negative effect of sulfides on elongation by spheroidizing the shape of sulfides, Ca may be added as needed. In order to realize such an effect, it is preferable that the Ca content be 0.0005% or more. On the other hand, in the case where the Ca content is more than 0.0050%, the sulfides of Ca deteriorate bendability. Therefore, in the case where Ca is added, it is preferable that the Ca content be 0.0050% or less.

### REM: 0.0050% or less

Since REM, like Ca, contributes to reducing the negative effect of sulfides on elongation by spheroidizing the shape of sulfides, REM may be added as needed. In order to realize such an effect, it is preferable that the REM content be 0.0005% or more. On the other hand, in the case where the REM content is more than 0.0050%, such an effect becomes saturated. Therefore, in the case where REM is added, it is preferable that the REM content be 0.0050% or less.

Hereafter, the microstructure of the high-strength cold-rolled steel sheet according to the present invention will be described in detail. The high-strength cold-rolled steel sheet according to the present invention includes ferrite and tempered martensite. In addition, the high-strength cold-rolled steel sheet according to the present invention may include non-recrystallized ferrite. The ferrite has an average crystal grain diameter of 3 µm or less and a volume fraction of 45% to 65%. In addition, the tempered martensite has an average crystal grain diameter of 2 µm or less and a volume fraction of 35% to 55%. Moreover, the non-recrystallized ferrite has an average crystal grain diameter of 5 µm or less and a volume fraction of 5% or less (including 0%). The term "a volume fraction" here shall refer to a volume fraction with respect to the whole steel sheet, and the same shall apply hereinafter.

In the case where the volume fraction of ferrite described above is less than 45%, it is difficult to achieve sufficient elongation of steel sheet. Therefore, the lower limit of the volume fraction of ferrite is set to be 45%, or preferably more than 50%. In addition, in the case where the volume fraction of ferrite described above is more than 65%, it is difficult to achieve a tensile strength (TS) of 1150 MPa or more even in the case where there is an increase in the hardness of tempered martensite. Therefore, the volume fraction of ferrite is set to be 65% or less, or preferably 60% or less. In addition, in the case where the average crystal grain diameter of ferrite is more than 3 µm, it is difficult to improve tensile strength (TS) by crystal grain fining. Therefore, the average crystal grain diameter of ferrite is set to be 2.5 µm or less.

In the case where the volume fraction of tempered martensite described above is less than 35%, it is difficult to achieve a tensile strength (TS) of 1150 MPa or more even in the case where there is an increase in the hardness of tempered martensite. Therefore, the lower limit of the volume fraction of tempered martensite is set to be 35%. On the other hand, in the case where the volume fraction of tempered martensite is more than 55%, since tempered martensite grains tend to combine with each other, it is not possible to achieve sufficient elongation. Therefore, the volume fraction of tempered martensite is set to be 55% or less, or preferably 50% or less. In addition, in the case where the average crystal grain diameter of tempered martensite is more than 2 µm, since tempered martensite grains combine with each other even in the case where the volume fraction of tempered martensite is controlled to be 35% to 55%, there is deterioration in elongation. Therefore, the average crystal grain diameter of tempered martensite is set to be 2 µm or less, or preferably 1.5 µm or less.

In addition, as a result of adding Ti and/or Nb, there is a case where non-recrystallized ferrite is formed depending on annealing temperature and annealing time. Although non-recrystallized ferrite, which has a high dislocation density, contributes to an increase in tensile strength (TS), non-recrystallized ferrite does not contribute to an increase in elongation. In the case where the average crystal grain diameter of non-recrystallized ferrite is 5 µm or less, it is possible to prevent surrounding tempered martensite grains from combining with each other. Therefore, the average crystal grain diameter of non-recrystallized ferrite is set to be 5 µm or less. In addition, in the case where the volume fraction of non-recrystallized ferrite is more than 5%, it is difficult to achieve sufficient elongation. Therefore, the volume fraction of non-recrystallized ferrite is set to be 5% or less (including 0%), preferably 3% or less, or more preferably 1% or less.

In addition, in the case of the high-strength cold-rolled steel sheet according to the present invention, although there is a case where retained austenite or pearlite is formed in addition to ferrite, tempered martensite, and non-recrystallized ferrite, it is possible to achieve the object of the present invention as long as the above-described conditions regarding the volume fractions and average crystal grain diameters of ferrite, tempered martensite, and non-recrystallized ferrite are satisfied. However, it is preferable that the total volume fraction of retained austenite and pearlite be 3% or less. In addition, the high-strength cold-rolled steel sheet according to the present invention may include bainite. In the case where the steel sheet includes bainite, it is preferable that the total volume fraction of retained austenite, pearlite, and bainite be 3% or less.

Here, it is possible to observe the multi-phase microstructure of a steel sheet described above by using, for example, a SEM (scanning electron microscope). Specifically, first, a cross section in the thickness direction parallel to the rolling direction of a steel sheet is polished and then etched by using nital (an alcohol solution containing nitric acid). Subsequently, by taking microstructure photographs through the use of a scanning electron microscope at a magnification of 2000 times, by extracting desired regions in the obtained microstructure photograph data through image analysis, it is possible to identify ferrite, tempered martensite, non-recrystallized ferrite, pearlite, retained austenite, or bainite through the use of image analysis software (Image-Pro ver. 7 produced by Media Cybernetics, Inc.).

It is possible to determine the above-described desired volume fractions of ferrite, tempered martensite, and non-recrystallized ferrite by determining the area ratios of these phases through the use of a point-counting method (in accordance with ASTM E562-83 (1988)) and by defining the area ratios as the volume fractions. In addition, it is possible to determine the above-described desired average crystal grain diameters of ferrite, tempered martensite, and non-recrystallized ferrite by calculating the circle-equivalent diameters of these phases from a steel sheet microstructure photograph and by calculating the average values of the circle-equivalent diameters.

It is possible to control the above-described desired volume fractions and average crystal grain diameters of ferrite, tempered martensite, and non-recrystallized ferrite by adding at least one of Ti and Nb and/or by controlling a steel sheet microstructure after hot rolling has been performed.

Hereafter, the method for manufacturing the high-strength cold-rolled steel sheet according to the present invention will be described.

The method for manufacturing a high-strength cold-rolled steel sheet according to the present invention includes performing hot rolling on a steel slab having the chemical composition (constituent chemical elements) described above with a finishing delivery temperature of 850°C to 950°C in order to obtain a hot-rolled steel sheet, starting cooling on the hot-rolled steel sheet within one second after the hot rolling has been finished, performing first cooling to a first cooling stop temperature of 600°C to 700°C at a first average cooling rate of 80°C/s or more, performing second cooling to a second cooling stop temperature of 620°C or lower at a second average cooling rate of 5°C/s or more, then coiling the hot-rolled steel sheet, subsequently cold-rolling in order to obtain a cold-rolled steel sheet, and performing continuous annealing the cold-rolled steel sheet, in which heating is performed to a temperature of 250°C to 350°C, in which heating is then performed to a temperature of 660°C at a first average heating rate of 5°C/s to 25°C/s, in which heating is then performed to a temperature range of 680°C to 750°C at a second average heating rate of 10°C/s or less, in which holding is performed at a first soaking temperature of 680°C to 750°C for 180 seconds or more, in which third cooling is then performed to a third cooling stop temperature of 650°C to 720°C at a third average cooling rate of 1°C/s or more, in which fourth cooling is then performed to a fourth cooling stop temperature of 100°C or lower at a fourth average cooling rate of 100°C/s to 1000°C/s, and holding is subsequently performed at a second soaking temperature of 100°C to 250°C for 120 seconds to 1800 seconds.

### [Hot rolling process]

In the hot rolling process, hot rolling may be started at a temperature of 1150°C to 1300°C without reheating a cast steel slab having the chemical composition (constituent chemical elements) described above, or hot rolling may be started after having reheated the steel slab to a temperature of 1150°C to 1300°C. Although it is preferable that the slab used be manufactured by using a continuous casting method in order to prevent the macro segregation of the constituent chemical elements, the slab may also be manufactured by using an ingot-making method or a thin-slab-casting method. In the present invention, in addition to a conventional method, in which, after having manufactured a steel slab, the slab is first cooled to room temperature and then reheated, an energy-saving process such as a hot direct rolling or a direct rolling, that is, a method in which a slab in the hot state is charged into a heating furnace without cooling the slab, a method in which a slab is rolled immediately after heat retention has been performed, or a method in which a slab in the cast state is rolled may be used without causing any problem.

### (Hot rolling start temperature: 1150°C to 1300°C)

In hot rolling, rough rolling may first be performed on a steel slab. In the case where the hot rolling start temperature is lower than 1150°C, there may be deterioration in productivity due to an increase in rolling load. On the other hand, in the case where the hot rolling start temperature is higher than 1300°C, there may be an increase in heating costs. Therefore, it is preferable that the hot rolling start temperature be 1150°C to 1300°C.

### (Finishing delivery temperature: 850°C to 950°C)

In hot rolling, after having performed rough rolling on a steel slab, it is possible to obtain a hot-rolled steel sheet by performing finish rolling. By performing hot rolling, there is an increase in elongation after annealing has been performed due to the formation of a homogeneous microstructure and a decrease in the degree of the anisotropy of material properties in the steel sheet. In the case where the finishing delivery temperature is lower than 850°C, it is not possible to finish hot rolling in an austenite single phase region. On the other hand, in the case where the finishing delivery temperature is higher than 950°C, since there is coarsening in a hot-rolled microstructure, it is not possible to achieve fully satisfactory properties after annealing has been performed. Therefore, the finishing delivery temperature is set to be 850°C to 950°C.

### (First cooling)

In the method for manufacturing a high-strength cold-rolled steel sheet according to the present invention, cooling on the hot-rolled steel sheet is started within one second after finish rolling has been finished as described above, and first cooling is first performed to a temperature of 600°C to 700°C at a first average cooling rate of 80°C/s or more.

After finish rolling has been finished, in order to realize the effect of crystal grain fining in an annealing process, it is necessary that TiC and/or NbC be finely precipitated. Therefore, cooling on the hot-rolled steel sheet is started within one second after finish rolling has been performed, and first cooling is performed to a first cooling stop temperature of 600°C to 700°C at a first average cooling rate of 80°C/s or more. In the case where the first average cooling rate is less than 80°C/s, since ferrite transformation starts in the first cooling process, inhomogeneous steel sheet microstructure is formed in the hot-rolled steel sheet, which makes it impossible to achieve the desired elongation after annealing has been performed. In addition, in the case where the first cooling stop temperature is lower than 600°C, since low-temperature-formation phases such as bainite are inhomogeneously formed, it is not possible to achieve sufficient elongation after annealing has been performed. On the other hand, in the case the first cooling stop temperature is higher than 700°C, since an excessive amount of pearlite is formed, inhomogeneous steel sheet microstructure is formed in the hot-rolled steel sheet, and there is coarsening of crystal grains, resulting in a decrease in elongation after annealing has been performed. Therefore, in the first cooling process after finish rolling has been performed, cooling is performed to a first cooling stop temperature of 600°C to 700°C at a first average cooling rate of 80°C/s or more. It is preferable that the first cooling stop temperature be 650°C or higher.

### (Second cooling)

In the method for manufacturing a high-strength cold-rolled steel sheet according to the present invention, after first cooling has been performed as described above, second cooling is performed on the hot-rolled steel sheet to a second cooling stop temperature of 620°C or lower at a second average cooling rate of 5°C/s or more. In this second cooling process, the cooling where the second average cooling rate is less than 5°C/s and/or the second cooling stop temperature is higher than 620°C, coarsens TiC and/or NbC precipitated in the steel sheet. Coarsening of the TiC and/or NbC does not contribute to the crystal grain fining in an annealing process, which results in deterioration in the elongation of the steel sheet. Therefore, in the second cooling process, cooling is performed to a second cooling stop temperature of 620°C or lower at a second average cooling rate of 5°C/s or more.

### (Coiling)

In the method for manufacturing a high-strength cold-rolled steel sheet according to the present invention, after second cooling has been performed as described above, coiling the hot-rolled steel sheet. In the case where the coiling temperature is higher than 620°C, since there is coarsening of TiC and/or NbC precipitated in the steel sheet, there is a case where the precipitates do not contribute to the crystal grain fining in an annealing process. Therefore, it is preferable that the coiling temperature be 620°C or lower, or more preferably 600°C or lower. Although there is no particular limitation on the lower limit of the coiling temperature, in the case where the coiling temperature is lower than 400°C, an excessive amount of hard martensite is formed, there is an increase in cold rolling load. Therefore, it is preferable that the coiling temperature be 400°C or higher.

### [Pickling process]

In the method for manufacturing the high-strength cold-rolled steel sheet according to the present invention, pickling may be performed on the hot-rolled steel sheet after the hot rolling process described above. It is preferable that scale on the surface of the hot-rolled steel sheet be removed by performing pickling. There is no particular limitation on the method used for pickling, and pickling may be performed by using a commonly used method.

### [Cold rolling process]

In the method for manufacturing the high-strength cold-rolled steel sheet according to the present invention, after pickling has been performed as described above, cold rolling, in which rolling is performed in order to obtain a cold-rolled steel sheet having a specified thickness, is performed. There is no particular limitation on the method used for performing cold rolling, and cold rolling may be performed by using a commonly used method.

### [Annealing process]

In the method for manufacturing the high-strength cold-rolled steel sheet according to the present invention, after cold rolling has been performed as described above, annealing is performed on the cold-rolled steel sheet. In the annealing process, it is necessary that recrystallization progress and that ferrite and tempered martensite be formed in a steel sheet microstructure in order to increase strength. Therefore, in the annealing process, heating is performed to a temperature of 250°C to 350°C, heating is then performed to a temperature of 660°C at a first average heating rate of 5°C/s to 25°C/s, heating is then performed to a temperature range of 680°C to 750°C at a second average heating rate of 10°C/s or less, holding is performed at a first soaking temperature of 680°C to 750°C for 180 seconds or more, third cooling is then performed to a third cooling stop temperature of 650°C to 700°C at a third average cooling rate of 1°C/s or more, fourth cooling is then performed to a fourth cooling stop temperature of 100°C or lower at a fourth average cooling rate of 100°C/s to 1000°C/s, and holding is subsequently performed at a second soaking temperature of 100°C to 250°C for 120 seconds to 1800 seconds.

### (Heating to a temperature of 250°C to 350°C)

There is no particular limitation on the method used for heating to a temperature of 250°C to 350°C, that is, the temperature at which recrystallization starts due to annealing, and heating may be performed by using a commonly used method. Here, in this case, heating may be started from room temperature (0°C to 35°C).

### (First average heating rate to a temperature of 660°C: 5°C/s to 25°C/s)

In the annealing process of the method for manufacturing the high-strength cold-rolled steel sheet according to the present invention, after heating has been performed as described above, the first average heating rate to a temperature of 660°C is controlled. With this, by forming the nucleation sites of recrystallized ferrite before heating is performed to a dual phase region, and by controlling the speed of the formation of the nucleation sites of recrystallized ferrite to be larger than that of coarsening of the nucleation sites in order to grow grains, it is possible to make the crystal grains fine after the annealing process. In the case where heating is performed at a first average heating rate of more than 25°C/s, since recrystallization is less likely to progress, an excessive amount of non-recrystallized ferrite is retained in the final steel sheet microstructure, which results in insufficient elongation. Therefore, the upper limit of the first average heating rate is set to be 25°C/s. In addition, in the case where heating is performed at a first average heating rate of less than 5°C/s, since the crystal grains of ferrite are coarsened, it is not possible to achieve the desired average crystal grain diameter. Therefore, the first average heating rate is set to be 5°C/s or more, or preferably 7°C/s or more.

### (Second average heating rate to first soaking temperature (680°C to 750°C): 10°C/s or less)

Fine ferrite is formed in a temperature range up to 660°C, and the formation of the nucleation of austenite begins at a temperature equal to or higher than the Ac₁ transformation temperature, that is, in a temperature range in which a dual phase is formed. After heating has been performed to a temperature of 660°C, the second average heating rate to the first soaking temperature (680°C to 750°C) is set to be 10°C/s or less so that recrystallization is finished within the desired range. In the case where the second average heating rate is more than 10°C/s, since the nucleation of austenite is more likely to occur, an excessive amount of non-recrystallized ferrite is retained in the final steel sheet microstructure, which results in insufficient ductility. Therefore, the upper limit of the second average heating rate is set to be 10°C/s. Although there is no particular limitation on the lower limit of the second average heating rate, in the case where the second average heating rate is less than 0.5°C/s, there may be coarsening of ferrite. Therefore, it is preferable that the second average heating rate be 0.5°C/s or more.

### (First soaking temperature (holding temperature): 680°C to 750°C)

The first soaking temperature is in a temperature range in which a dual phase composed of ferrite and austenite is formed. In the case where the first soaking temperature is lower than 680°C, since it is lower than the temperature range in which a dual phase is formed, it is not possible to achieve a tensile strength (TS) of 1150 MPa or more. Therefore, the lower limit of the first soaking temperature is set to be 680°C. In the case where the first soaking temperature is higher than 750°C, since the volume fraction of tempered martensite becomes high, tempered martensite grains combine with each other. Therefore, the first soaking temperature is set to be 750°C or lower.

### (Holding time at first soaking temperature: 180 seconds or more)

In order to allow recrystallization to progress and in order to allow austenite transformation to partially occur at a first soaking temperature of 680°C to 750°C described above, it is necessary that the holding time be 180 seconds or more. In the case where the holding time at the first soaking temperature is less than 180 seconds, since there is an increase in the amount of non-recrystallized ferrite, there is deterioration in elongation. Although there is no particular limitation on the upper limit of the holding time at the first soaking temperature, it is preferable that the upper limit be 3600 seconds in order to inhibit an increase in energy consumption due to holding at the first soaking temperature.

### (Third cooling)

In the method for manufacturing the high-strength cold-rolled steel sheet according to the present invention, in the case where the third cooling stop temperature of third cooling, which is performed after holding has been performed at the first soaking temperature described above, is lower than 650°C and/or the third average cooling rate is less than 1°C/s, since there is an increase in the volume fraction of ferrite, an excessive pearlite is formed, which makes it impossible to achieve the desired volume fractions. On the other hand, in the case where the third cooling stop temperature is higher than 720°C, since there is a decrease in the volume fraction of ferrite, it is not possible to achieve sufficient elongation. Therefore, this third cooling should be performed to a third cooling stop temperature of 650°C to 720°C at a third average cooling rate of 1°C/s or more. In addition, it is preferable that the third average cooling rate be 100°C/s or less in order to allow C and Mn to be sufficiently concentrated in austenite. It is preferable that the above-described third cooling stop temperature be 720°C or lower.

### (Fourth cooling)

In the method for manufacturing the high-strength cold-rolled steel sheet according to the present invention, in the case where the fourth average cooling rate of fourth cooling, which is performed after third cooling has been performed as described above, is less than 100°C/s, since excessive amounts of bainite and retained austenite are formed, it is not possible to achieve the desired volume fractions. On the other hand, in the case where the fourth average cooling rate is more than 1000°C/s, a shrinkage cracking may occur in a steel sheet due to cooling. In addition, in the case where the fourth cooling stop temperature is higher than 100°C, insufficient martensite transformation occurs, which results in insufficient tensile strength (TS). Therefore, this fourth cooling should be performed to a fourth cooling stop temperature of 100°C or lower at a fourth average cooling rate of 100°C/s to 1000°C/s. Here, in the case of fourth cooling, it is preferable that water quenching be performed.

### (Tempering)

After fourth cooling has been performed as described above, a tempering treatment is performed on the cold-rolled steel sheet. This tempering treatment is performed in order to prevent, for example, season cracking by forming tempered martensite having a high toughness. In the case where the tempering temperature is lower than 100°C, since the toughness of tempered martensite is insufficient, season cracking may occur. On the other hand, in the case where the tempering temperature is higher than 250°C, there is an increase in reheating costs, and there is a case where it is not possible to realize the desired effects due to a decrease in tensile strength (TS). Therefore, in order to temper martensite, the tempering temperature (hereinafter, also referred to as "second soaking temperature") is set to be 100°C to 250°C.

In addition, in the case where the holding time (hereinafter, also referred to as "tempering time") at the second soaking temperature is less than 120 seconds, since the reformation of martensite does not sufficiently occur at the holding temperature, it is not possible to expect the effect of increasing formability. On the other hand, in the case where the holding time at the second soaking temperature is more than 1800 seconds, since the softening of martensite excessively progresses, it is not possible to achieve a tensile strength (TS) of 1150 MPa or more, and there is an increase in manufacturing costs due to an increase in reheating time. Therefore, the holding time at the second soaking temperature is set to be 120 seconds to 1800 seconds. Here, there is no limitation on the cooling method or the cooling rate used after holding at the second soaking temperature has been performed.

In addition, skin pass rolling may be performed after annealing has been performed. It is preferable that the elongation ratio be 0.1% to 2.0%

Here, within the range according to the present invention, a galvanized steel sheet may be manufactured by performing a galvanizing treatment in the annealing process, and a galvannealed steel sheet may be manufactured by performing an alloying treatment after a galvanizing treatment has been performed. Moreover, by performing an electroplating treatment on the cold-rolled steel sheet according to the present invention, an electroplated steel sheet may be manufactured.

### EXAMPLES

Hereafter, the examples of the present invention will be described. However, the present invention is not originally limited by the examples described below, and the present invention may be performed by appropriately making alterations within a range in accordance with the intent of the present invention. Working examples performed in such a way are all within the technical scope of the present invention.

By preparing molten steels having the chemical compositions given in Table 1 and the balance being Fe and inevitable impurities by using a converter, and by using a continuous casting method, steel slabs were obtained. After having cooled the slabs to room temperature, by reheating the cooled slabs, and by performing hot rolling with a hot rolling start temperature of 1250°C and with the finishing delivery temperature (FDT) given in Table 2, hot-rolled steel sheets were obtained. Then, cooling was started at the cooling start times given in Table 2, first cooling was performed to the first cooling stop temperatures (Tq1) at the first average cooling rates (CR1) under the conditions given in Table 2, second cooling was then performed to the second cooling stop temperatures (Tq2, coiling temperatures (CT)) at the second average cooling rates (CR2), and coiling was performed at the coiling temperatures (CT).

Subsequently, by performing pickling on the obtained (CT)) at the second average cooling rates (CR2), and coiling was performed at the coiling temperatures (CT).

Subsequently, by performing pickling on the obtained hot-rolled steel sheets, and by then performing cold rolling, cold-rolled steel sheets were manufactured.

Subsequently, heating was performed from room temperature (25°C) to a temperature of 300°C, heating was performed to a temperature of 660°C at the first average heating rates (C1) given in Table 2, heating was performed to the soaking temperatures at the second average heating rate (C2) given in Table 2, annealing was performed at the first soaking temperatures for the first soaking times (first holding times) given in Table 2, cooling (third cooling) was then performed to the third cooling stop temperatures (Tq3) at the third average cooling rates (CR3) given in Table 2, cooling (fourth cooling) was then performed to the fourth cooling stop temperatures (Tq4) at the fourth average cooling rates (CR4) given in Table 2, heating was then performed to the tempering temperatures (second soaking temperatures) given in Table 2, holding was performed for the tempering times (second holding times) given in table 2, and cooling was performed to room temperature.

**[Table 1]**

| Steel Grade | Chemical Composition (mass%) | | | | | | | | | | Note |
|---|---|---|---|---|---|---|---|---|---|---|---|
| | C | Si | Mn | P | S | Al | N | Ti | Nb | Other | |
| A | 0.20 | 1.49 | 2.11 | 0.01 | 0.002 | 0.03 | 0.002 | 0.10 | - | - | Example Steel |
| B | 0.24 | 1.61 | 2.03 | 0.01 | 0.001 | 0.02 | 0.002 | - | 0.08 | - | Example Steel |
| C | 0.19 | 1.88 | 2.31 | 0.01 | 0.001 | 0.03 | 0.002 | 0.05 | 0.04 | B:0.0015 | Example Steel |
| D | 0.22 | 1.88 | 2.03 | 0.01 | 0.002 | 0.02 | 0.002 | 0.08 | - | V:0.04 | Example Steel |
| E | 0.20 | 1.44 | 1.78 | 0.02 | 0.001 | 0.03 | 0.003 | 0.11 | - | Cr:0.18 | Example Steel |
| F | 0.21 | 1.45 | 1.97 | 0.01 | 0.001 | 0.03 | 0.001 | 0.12 | - | Mo:0.15 | Example Steel |
| G | 0.21 | 2.01 | 1.88 | 0.02 | 0.003 | 0.04 | 0.003 | - | 0.09 | Cu:0.18 | Example Steel |
| H | 0.23 | 1.39 | 2.49 | 0.01 | 0.002 | 0.03 | 0.001 | - | 0.07 | Ni:0.22 | Example Steel |
| I | 0.21 | 1.44 | 2.33 | 0.02 | 0.002 | 0.04 | 0.003 | - | 0.06 | Ca:0.0028 | Example Steel |
| J | 0.21 | 1.71 | 2.25 | 0.01 | 0.001 | 0.03 | 0.002 | 0.06 | 0.04 | REM:0.0028 | Example Steel |
| K | 0.12 | 1.59 | 2.33 | 0.01 | 0.002 | 0.03 | 0.002 | 0.02 | 0.0015 | - | Comparative Steel |
| L | 0.21 | 0.59 | 2.01 | 0.01 | 0.002 | 0.03 | 0.003 | 0.02 | 0.0022 | - | Comparative Steel |
| M | 0.18 | 1.88 | 1.21 | 0.01 | 0.002 | 0.03 | 0.003 | 0.02 | 0.0031 | - | Comparative Steel |
| N | 0.19 | 1.41 | 2.84 | 0.02 | 0.002 | 0.04 | 0.003 | 0.02 | 0.0019 | - | Comparative Steel |
| O | 0.22 | 1.66 | 2.22 | 0.01 | 0.001 | 0.03 | 0.002 | 0.03 | - | - | Comparative Steel |
| P | 0.21 | 1.44 | 1.88 | 0.02 | 0.002 | 0.03 | 0.003 | - | 0.03 | - | Comparative Steel |

| | | | | | | | | | | | |
|---|---|---|---|---|---|---|---|---|---|---|---|
| • Remainder which is different from the constituent chemical elements described above: Fe and inevitable impurities • Underlined portion: out of the range according to the present invention | | | | | | | | | | | |

**[Table 2]**

| Sample No. | Steel Grade | Hot Rolling Condition | | | | | | Annealing Condition | | | | | | | | | |
|---|---|---|---|---|---|---|---|---|---|---|---|---|---|---|---|---|---|
| | | FDT (*1) | Cooling Start Time | CR1 (*2) | Tq1 (*3) | CR2 (*2) | Tq2(*), CT(*4) | C1 (*5) | C2 (*5) | First Soaking Temperature | First Holding Time | CR3 (*2) | Tq3 (*3) | CR4 (*2) | Tq4 (*3) | Tempering Temperature | Tempering Time |
| | | °C | s | °C/s | °C | °C/s | °C | °C/s | °C/s | °C | sec | °C/s | °C | °C/s | °C | °C | sec |
| 1 | A | 900 | 0.5 | 110 | 660 | 20 | 580 | 10 | 2 | 730 | 600 | 3 | 700 | 880 | 25 | 150 | 600 |
| 2 | A | 900 | 0.5 | 100 | 650 | 25 | 580 | 12 | 2 | 720 | 650 | 3 | 710 | 870 | 25 | 200 | 500 |
| 3 | B | 900 | 0.5 | 100 | 620 | 25 | 600 | 8 | 3 | 700 | 600 | 3 | 680 | 900 | 25 | 150 | 600 |
| 4 | C | 900 | 0.5 | 100 | 620 | 22 | 500 | 8 | 3 | 730 | 600 | 4 | 720 | 980 | 20 | 200 | 600 |
| 5 | D | 900 | 0.5 | 100 | 620 | 20 | 550 | 6 | 3 | 730 | 530 | 4 | 700 | 840 | 20 | 200 | 600 |
| 6 | E | 900 | 0.5 | 100 | 630 | 20 | 570 | 10 | 5 | 730 | 500 | 4 | 700 | 880 | 15 | 200 | 1000 |
| 7 | F | 900 | 0.5 | 100 | 600 | 30 | 570 | 15 | 4 | 730 | 350 | 3 | 680 | 880 | 20 | 220 | 600 |
| 8 | G | 900 | 0.5 | 100 | 660 | 20 | 570 | 20 | 1 | 730 | 350 | 3 | 700 | 880 | 20 | 180 | 600 |
| 9 | H | 900 | 0.5 | 100 | 650 | 45 | 570 | 15 | 2 | 730 | 500 | 5 | 720 | 860 | 25 | 180 | 600 |
| 10 | I | 900 | 0.5 | 100 | 670 | 30 | 570 | 8 | 2 | 690 | 350 | 3 | 650 | 880 | 20 | 180 | 600 |
| 11 | J | 900 | 0.5 | 90 | 670 | 20 | 550 | 20 | 2 | 730 | 500 | 3 | 700 | 900 | 20 | 180 | 600 |
| 12 | A | 800 | 0.5 | 120 | 680 | 30 | 550 | 8 | 4 | 730 | 600 | 3 | 700 | 880 | 24 | 150 | 200 |
| 13 | A | 900 | 0.5 | 50 | 680 | 20 | 530 | 10 | 3 | 730 | 650 | 3 | 700 | 880 | 20 | 150 | 500 |
| 14 | A | 900 | 0.5 | 90 | 750 | 30 | 550 | 10 | 3 | 730 | 350 | 3 | 700 | 890 | 20 | 150 | 600 |
| 15 | A | 900 | 0.5 | 100 | 650 | 2 | 600 | 10 | 5 | 730 | 650 | 3 | 700 | 900 | 20 | 150 | 600 |
| 16 | A | 900 | 0.5 | 100 | 690 | 25 | 680 | 10 | 5 | 730 | 650 | 3 | 710 | 900 | 20 | 200 | 600 |
| 17 | A | 900 | 0.5 | 100 | 670 | 20 | 550 | 1 | 5 | 730 | 600 | 3 | 710 | 880 | 20 | 200 | 600 |
| 18 | A | 900 | 0.5 | 100 | 670 | 25 | 560 | 50 | 3 | 710 | 600 | 3 | 700 | 880 | 20 | 200 | 600 |
| 19 | A | 900 | 0.5 | 100 | 670 | 20 | 600 | 10 | 15 | 720 | 600 | 3 | 700 | 890 | 24 | 200 | 600 |
| 20 | A | 900 | 0.5 | 100 | 670 | 20 | 600 | 10 | 4 | 830 | 600 | 3 | 700 | 900 | 19 | 150 | 600 |
| 21 | A | 900 | 0.5 | 100 | 670 | 20 | 600 | 10 | 4 | 730 | 600 | 0.2 | 700 | 800 | 30 | 200 | 600 |
| 22 | A | 900 | 0.5 | 100 | 670 | 20 | 600 | 10 | 4 | 730 | 600 | 1 | 450 | 880 | 20 | 200 | 600 |
| 23 | A | 900 | 0.5 | 100 | 670 | 20 | 600 | 10 | 4 | 720 | 650 | 3 | 700 | 890 | 31 | 550 | 600 |
| 24 | K | 900 | 0.5 | 100 | 670 | 20 | 600 | 10 | 3 | 720 | 600 | 4 | 700 | 990 | 24 | 200 | 500 |
| 25 | L | 900 | 0.5 | 100 | 670 | 20 | 600 | 10 | 2 | 730 | 650 | 4 | 680 | 880 | 24 | 180 | 500 |
| 26 | M | 900 | 0.5 | 110 | 670 | 30 | 600 | 10 | 4 | 720 | 600 | 3 | 700 | 880 | 24 | 200 | 600 |
| 27 | N | 900 | 0.5 | 100 | 670 | 20 | 600 | 10 | 2 | 720 | 600 | 4 | 700 | 880 | 23 | 150 | 600 |
| 28 | O | 900 | 0.5 | 100 | 670 | 25 | 570 | 5 | 2 | 740 | 600 | 4 | 700 | 850 | 25 | 150 | 600 |
| 29 | P | 900 | 0.5 | 100 | 650 | 20 | 570 | 10 | 2 | 740 | 600 | 4 | 700 | 900 | 25 | 200 | 600 |

| | | | | | | | | | | | | | | | | | |
|---|---|---|---|---|---|---|---|---|---|---|---|---|---|---|---|---|---|
| Underlined portion: out of the range according to the present invention *1) FDT (°C): Finishing Delivery Temperature *2) CR1, CR2, CR3, and CR4 (°C/s): respectively the first average cooling rate, the second average cooling rate, the third average cooling rate, the fourth average cooling rate in this order *3) Tq1, Tq2, Tq3, and Tq4 (°C): respectively the first cooling stop temperature, the second cooling stop temperature, the third cooling stop temperature, the fourth cooling stop temperature in this order *4) CT (°C): coiling temperature *5) C1 and C2 (°C/s): respectively first average heating rate and second average heating rate in this order | | | | | | | | | | | | | | | | | |

By using a SEM (scanning electron microscope), a TEM (transmission electron microscope), and an FE-SEM (field-emission-type scanning electron microscope), steel sheet microstructure was observed in order to identify ferrite, tempered martensite, non-recrystallized ferrite, and other kinds of steel microstructures.

The volume fractions of ferrite, tempered martensite, and non-recrystallized ferrite of the steel sheet were determined by polishing a cross section in the thickness direction parallel to the rolling direction of the steel sheet, by then etching the polished cross section through the use of a 3%-nital solution, by observing the etched cross section through the use of a SEM (scanning electron microscope) at a magnification of 2000 times, and by using Image-Pro produced by Media Cybernetics, Inc. Specifically, by determining the area fraction of each of the phases through the use of a point-counting method (in accordance with ASTM E562-83 (1988)), and by defining the area fraction as the volume fraction. Regarding the average crystal grain diameters of ferrite, tempered martensite, and non-recrystallized ferrite, since it was possible to calculate the areas of the grains of each of the phases by inputting the steel sheet microstructure photographs, in which the crystal grains of ferrite, tempered martensite, and non-recrystallized ferrite had been identified in advance, into Image-Pro described above, by calculating circle-equivalent diameters from the calculated areas, the average crystal grain diameter of each of the phases was defined as the average of the calculated circle-equivalent diameters. In addition, the average crystal grain diameters of microstructures, that is, bainite and retained austenite were determined by calculating the circle-equivalent diameters of the grains of each of the phases from the steel sheet microstructure photograph through the use of Image-Pro described above and by calculating the average of the circle-equivalent diameters.

By performing a tensile test (JIS Z 2241 (1998)) on a JIS No. 5 tensile test piece which had been taken from the manufactured steel sheet so that the longitudinal direction (tensile direction) of the test piece was a direction at a right angle to the rolling direction, tensile strength (TS) and elongation (EL) were determined.

Regarding delayed fracturing resistance, a test piece of 30 mm × 100 mm taken from the obtained cold-rolled steel sheet so that the longitudinal direction of the test piece was the rolling direction, and subjected to the end surface grinding, was bended at an angle of 180° by using a punch having a tip curvature radius of 10 mm. By bolting the test piece which had been subjected to bending work against spring back which occurred in the test piece so that the inner distance was 20 mm in order to apply stress to the test piece, and by then immersing the test piece in hydrochloric acid having a temperature of 25°C and a pH of 1, time until fracturing occurred was determined within 100 hours. A case where a crack did not occur in the test piece within 100 hours was judged as "O", and a case where a crack occurred in the test piece was judged as "×"

The determined results of steel sheet microstructure, tensile strength (TS), elongation (EL), and delayed fracturing resistance were given in Table 3.

**[Table 3]**

| Sample No. | Steel Sheet Microstructure | | | | | | | Tensile Property | | Delayed Fracturing Resistance | Note |
|---|---|---|---|---|---|---|---|---|---|---|---|
| | Ferrite | | Tempered Martensite | | Non-recrystallized Ferrite | | Remainder | TS/Mpa | EL/% | | |
| | Volume Fraction/% | Average Grain Diameter/µm | Volume Fraction/% | Average Grain Diameter/µm | Volume Fraction/% | Average Grain Diameter/µm | | | | | |
| 1 | 55 | 2.5 | 45 | 1.5 | - | - | - | 1221 | 17.1 | ○ | Example |
| 2 | 48 | 2.0 | 52 | 2.0 | - | - | - | 1155 | 17.8 | ○ | Example |
| 3 | 50 | 2.5 | 50 | 2.0 | - | - | - | 1212 | 16.5 | ○ | Example |
| 4 | 52 | 2.5 | 48 | 1.0 | - | - | - | 1188 | 17.3 | ○ | Example |
| 5 | 55 | 2.5 | 45 | 2.0 | - | - | - | 1192 | 16.8 | ○ | Example |
| 6 | 58 | 2.0 | 42 | 1.5 | - | - | - | 1234 | 16.9 | ○ | Example |
| 7 | 55 | 2.0 | 45 | 1.0 | - | - | - | 1215 | 16.9 | ○ | Example |
| 8 | 52 | 2.0 | 48 | 1.5 | - | - | - | 1221 | 17.3 | ○ | Example |
| 9 | 55 | 2.0 | 45 | 1.0 | - | - | - | 1222 | 16.3 | ○ | Example |
| 10 | 55 | 2.5 | 43 | 1.0 | 2 | 4 | - | 1234 | 16.5 | ○ | Example |
| 11 | 52 | 2.5 | 48 | 2.0 | - | - | - | 1175 | 17.6 | ○ | Example |
| 12 | 45 | 4.0 | 55 | 3.5 | - | - | - | 1158 | 13.8 | ○ | Comparative Example |
| 13 | 46 | 2.5 | 54 | 2.5 | - | - | - | 1177 | 14.3 | ○ | Comparative Example |
| 14 | 49 | 3.0 | 51 | 3.0 | - | - | - | 1188 | 14.0 | ○ | Comparative Example |
| 15 | 49 | 3.5 | 51 | 3.5 | - | - | - | 1188 | 14.5 | ○ | Comparative Example |
| 16 | 47 | 3.0 | 53 | 3.0 | - | - | - | 1221 | 13.8 | ○ | Comparative Example |
| 17 | 49 | 4.5 | 51 | 3.5 | - | - | - | 1191 | 14.3 | ○ | Comparative Example |
| 18 | 52 | 2.0 | 41 | 1.5 | 7 | 3 | - | 1223 | 11.4 | ○ | Comparative Example |
| 19 | 51 | 3.0 | 41 | 2.5 | 8 | 4 | - | 1312 | 10.1 | × | Comparative Example |
| 20 | 34 | 4.5 | 66 | 5.5 | - | - | - | 1451 | 9.8 | × | Comparative Example |
| 21 | 69 | 3.5 | 25 | 2.0 | - | - | P | 1122 | 14.8 | ○ | Comparative Example |
| 22 | 67 | 3.0 | 24 | 2.0 | - | - | B, P | 1089 | 15.9 | ○ | Comparative Example |
| 23 | 55 | 2.0 | 45 | 2.5 | - | - | - | 889 | 18.1 | ○ | Comparative Example |
| 24 | 68 | 4.0 | 32 | 2.0 | - | - | - | 1011 | 16.5 | ○ | Comparative Example |
| 25 | 38 | 3.0 | 62 | 3.5 | - | - | - | 1431 | 8.9 | × | Comparative Example |
| 26 | 71 | 4.5 | 37 | 2.0 | - | - | P | 879 | 18.4 | ○ | Comparative Example |
| 27 | 40 | 2.5 | 60 | 4.5 | - | - | - | 1411 | 9.2 | × | Comparative Example |
| 28 | 49 | 2.5 | 51 | 2.5 | - | - | - | 1388 | 12.3 | × | Comparative Example |
| 29 | 47 | 2.0 | 53 | 2.5 | - | - | - | 1245 | 14.7 | × | Comparative Example |

| | | | | | | | | | | | |
|---|---|---|---|---|---|---|---|---|---|---|---|
| Underlined portion: out of the range according to the present invention Remainder: B - bainite, P - pearlite | | | | | | | | | | | |

**[Table 3]**

| Sample No. | Steel Sheet Microstructure | | | | | | | Tensile Property | | Delayed Fracturing Resistance | Note |
|---|---|---|---|---|---|---|---|---|---|---|---|
| | Ferrite | | Tempered Martensite | | Non-recrystallized Ferrite | | Remainder | TS/Mpa | EL/% | | |
| | Volume Fraction/% | Average Grain Diameter/µm | Volume Fraction/% | Average Grain Diameter/µm | Volume Fraction/% | Average Grain Diameter/µm | | | | | |
| 1 | 55 | 2.5 | 45 | 1.5 | - | - | - | 1221 | 17.1 | ○ | Example |
| 2 | 48 | 2.0 | 52 | 2.0 | - | - | - | 1155 | 17.8 | ○ | Example |
| 3 | 50 | 2.5 | 50 | 2.0 | - | - | - | 1212 | 16.5 | ○ | Example |
| 4 | 52 | 2.5 | 48 | 1.0 | - | - | - | 1188 | 17.3 | ○ | Example |
| 5 | 55 | 2.5 | 45 | 2.0 | - | - | - | 1192 | 16.8 | ○ | Example |
| 6 | 58 | 2.0 | 42 | 1.5 | - | - | - | 1234 | 16.9 | ○ | Example |
| 7 | 55 | 2.0 | 45 | 1.0 | - | - | - | 1215 | 16.9 | ○ | Example |
| 8 | 52 | 2.0 | 48 | 1.5 | - | - | - | 1221 | 17.3 | ○ | Example |
| 9 | 55 | 2.0 | 45 | 1.0 | - | - | - | 1222 | 16.3 | ○ | Example |
| 10 | 55 | 2.5 | 43 | 1.0 | 2 | 4 | - | 1234 | 16.5 | ○ | Example |
| 11 | 52 | 2.5 | 48 | 2.0 | - | - | - | 1175 | 17.6 | ○ | Example |
| 12 | 45 | 4.0 | 55 | 3.5 | - | - | - | 1158 | 13.8 | ○ | Comparative Example |
| 13 | 46 | 2.5 | 54 | 2.5 | - | - | - | 1177 | 14.3 | ○ | Comparative Example |
| 14 | 49 | 3.0 | 51 | 3.0 | - | - | - | 1188 | 14.0 | ○ | Comparative Example |
| 15 | 49 | 3.5 | 51 | 3.5 | - | - | - | 1188 | 14.5 | ○ | Comparative Example |
| 16 | 47 | 3.0 | 53 | 3.0 | - | - | - | 1221 | 13.8 | ○ | Comparative Example |
| 17 | 49 | 4.5 | 51 | 3.5 | - | - | - | 1191 | 14.3 | ○ | Comparative Example |
| 18 | 52 | 2.0 | 41 | 1.5 | 7 | 3 | - | 1223 | 11.4 | ○ | Comparative Example |
| 19 | 51 | 3.0 | 41 | 2.5 | 8 | 4 | - | 1312 | 10.1 | × | Comparative Example |
| 20 | 34 | 4.5 | 66 | 5.5 | - | - | - | 1451 | 9.8 | × | Comparative Example |
| 21 | 69 | 3.5 | 25 | 2.0 | - | - | P | 1122 | 14.8 | ○ | Comparative Example |
| 22 | 67 | 3.0 | 24 | 2.0 | - | - | B, P | 1089 | 15.9 | ○ | Comparative Example |
| 23 | 55 | 2.0 | 45 | 2.5 | - | - | - | 889 | 18.1 | ○ | Comparative Example |
| 24 | 68 | 4.0 | 32 | 2.0 | - | - | - | 1011 | 16.5 | ○ | Comparative Example |
| 25 | 38 | 3.0 | 62 | 3.5 | - | - | - | 1431 | 8.9 | × | Comparative Example |
| 26 | 71 | 4.5 | 37 | 2.0 | - | - | P | 879 | 18.4 | ○ | Comparative Example |
| 27 | 40 | 2.5 | 60 | 4.5 | - | - | - | 1411 | 9.2 | × | Comparative Example |
| 28 | 49 | 2.5 | 51 | 2.5 | - | - | - | 1388 | 12.3 | × | Comparative Example |
| 29 | 47 | 2.0 | 53 | 2.5 | - | - | - | 1245 | 14.7 | × | Comparative Example |

| | | | | | | | | | | | |
|---|---|---|---|---|---|---|---|---|---|---|---|
| Underlined portion: out of the range according to the present invention Remainder: B - bainite, P - pearlite | | | | | | | | | | | |

the case of comparative example 18 where the volume fraction of non-recrystallized ferrite was more than 5%, the elongation (EL) was less than 15.0%.

In the case of comparative example 19 where the average crystal grain diameter of tempered martensite was more than 2 µm and where the volume fraction of non-recrystallized ferrite was more than 5%, the elongation (EL) was less than 15.0%, and the delayed fracturing resistance was deteriorated. In the case of comparative example 20 where the volume fraction of ferrite was less than 45%, where the average crystal grain diameter of ferrite was more than 3 µm, where the volume fraction of tempered martensite was more than 55%, and where the average crystal grain diameter of tempered martensite was more than 2 µm, the elongation (EL) was less than 15.0%, and the delayed fracturing resistance was deteriorated.

In the case of comparative example 21 where the volume fraction of ferrite was more than 65%, where the average crystal grain diameter of ferrite was more than 3 µm, and where the volume fraction of tempered martensite was less than 35%, the tensile strength (TS) was less than 1150 MPa, and the elongation (EL) was less than 15.0%. In the case of comparative example 22 where the volume fraction of ferrite was more than 65% and where the volume fraction of tempered martensite was less than 35%, the tensile strength (TS) was less than 1150 MPa. In the case of comparative example 23 where the average crystal grain diameter of tempered martensite was more than 2 µm, the tensile strength (TS) was less than 1150 MPa.

In the case of comparative example 24 where the volume fraction of ferrite was more than 65%, where the average crystal grain diameter of ferrite was more than 3 µm, and where the volume fraction of tempered martensite was less than 35%, the tensile strength (TS) was less than 1150 MPa. In the case of comparative example 25 where the volume fraction of tempered martensite was more than 55% and where the average crystal grain diameter of tempered martensite was more than 2 µm, the elongation (EL) was less than 15.0%, and the delayed fracturing resistance was deteriorated.

In the case of comparative example 26 where the volume fraction of ferrite was more than 65% and where the average crystal grain diameter of ferrite was more than 3 µm, the tensile strength (TS) was less than 1150 MPa. In the case of comparative example 27 where the volume fraction of ferrite was less than 45%, where the volume fraction of tempered martensite was more than 55%, and where the average crystal grain diameter of tempered martensite was more than 2 µm, the elongation (EL) was less than 15.0%, and the delayed fracturing resistance was deteriorated.

In the case of comparative examples 28 and 29 where the average crystal grain diameter of tempered martensite was more than 2 µm, the elongation (EL) was less than 15.0%, and the delayed fracturing resistance was deteriorated.

## Claims

1. A high-strength cold-rolled steel sheet having
a chemical composition containing, by mass%, C: 0.16% to 0.30%, Si: 1.2% to 2.2%, Mn: 1.5% to 2.5%, P: 0.05% or less, S: 0.005% or less, Al: 0.10% or less, N: 0.007% or less, at least one of Ti and Nb, optionally B: 0.010% or less, optionally one or more selected from V: 0.50% or less, Cr: 0.50% or less, Mo: 0.50% or less, Cu: 0.50% or less, Ni: 0.50% or less, Ca: 0.0050% or less, and REM: 0.0050% or less, and the balance being Fe and inevitable impurities, in which Ti + Nb is 0.04% to 0.15%, and
a multi-phase microstructure including ferrite having an average crystal grain diameter of 2.5 µm or less in an amount of 45% to 65% in terms of volume fraction, tempered martensite having an average crystal grain diameter of 2 µm or less in an amount of 35% to 55% in terms of volume fraction, and non-recrystallized ferrite having an average crystal grain diameter of 5 µm or less in an amount of 5% or less in terms of volume fraction, the high-strength cold-rolled steel sheet having a tensile strength of 1150 MPa or more and an elongation of 15,0 % or more,
wherein the average crystal grain diameters of ferrite, tempered martensite, and non-recrystallized ferrite is determined by calculating the circle equivalent diameters of these phases from a steel sheet microstructure photograph and by calculating the average values of the circle-equivalent diameters.

2. A method for manufacturing a high-strength cold-rolled steel sheet according to Claim 1, the method comprising:
performing hot rolling on a steel slab with a finishing delivery temperature of 850°C to 950°C in order to obtain a hot-rolled steel sheet,
starting cooling on the hot-rolled steel sheet within one second after the hot rolling has been finished,
performing first cooling to a first cooling stop temperature of 600°C to 700°C at a first average cooling rate of 80°C/s or more,
performing second cooling to a second cooling stop temperature of 620°C or lower at a second average cooling rate of 5°C/s or more,
then coiling the hot-rolled steel sheet,
subsequently cold-rolling in order to obtain a cold-rolled steel sheet, and
performing continuous annealing the cold-rolled steel sheet,
the continuous annealing including
heating the steel sheet to a temperature of 250°C to 350°C,
then heating the steel sheet to a temperature of 660°C at a first average heating rate of 5°C/s to 25°C/s,
then heating the steel sheet to a temperature of 680°C to 750°C at a second average heating rate of 10°C/s or less,
holding the steel sheet at a first soaking temperature of 680°C to 750°C for 180 seconds or more,
then performing third cooling to a third cooling stop temperature of 650°C to 720°C at a third average cooling rate of 1°C/s or more,
then performing fourth cooling to a fourth cooling stop temperature of 100°C or lower at a fourth average cooling rate of 100°C/s to 1000°C/s, and
subsequently holding the steel sheet at a second soaking temperature of 100°C to 250°C for 120 seconds to 1800 seconds.

## Patentansprüche

1. Hochfestes kaltgewalztes Stahlblech, aufweisend:
eine chemische Zusammensetzung, die in Masse% enthält: C: 0,16 % bis 0,30 %, Si: 1,2 % bis 2,2 %, Mn: 1,5 % bis 2,5 %, P: 0,05 % oder weniger, S: 0,005 % oder weniger, Al: 0,10 % oder weniger, N: 0,007 % oder weniger, wenigstens eines aus Ti und Nb, optional B: 0,010 % oder weniger, optional eines oder mehrere, ausgewählt aus V: 0,50 % oder weniger, Cr: 0,50 % oder weniger, Mo: 0,50 % oder weniger, Cu: 0,50 % oder weniger, Ni: 0,50 % oder weniger, Ca: 0,0050 % oder weniger und SEM: 0,0050 % oder weniger, wobei der Rest Fe und unvermeidliche Verunreinigungen sind, wobei Ti + Nb 0,04 % bis 0,15 % beträgt, und
ein mehrphasiges Gefüge, umfassend Ferrit mit einem durchschnittlichen Kristallkorndurchmesser von 2,5 µm oder weniger in einer Menge von 45 % bis 65 %, angegeben als Volumenfraktion, angelassenen Martensit mit einem durchschnittlichen Kristallkorndurchmesser von 2 µm oder weniger in einer Menge von 35 % bis 55 %, angegeben als Volumenfraktion, und nicht rekristallisierten Ferrit mit einem durchschnittlichen Kristallkorndurchmesser von 5 µm oder weniger in einer Menge von 5 % oder weniger, angegeben als Volumenfraktion,
wobei das hochfeste kaltgewalzte Stahlblech eine Zugfestigkeit von 1150 MPa oder mehr und eine Dehnung von 15,0 % oder mehr aufweist,
wobei die durchschnittlichen Kristallkorndurchmesser von Ferrit, angelassenem Martensit und nicht rekristallisiertem Ferrit durch Berechnen der Kreisäquivalentdurchmesser dieser Phasen anhand einer Fotografie des Stahlblechgefüges und durch Berechnen der Durchschnittswerte der Kreisäquivalentdurchmesser bestimmt werden.

2. Verfahren zur Herstellung eines hochfesten kaltgewalzten Stahlblechs nach Anspruch 1, wobei das Verfahren umfasst:
Vornehmen eines Warmwalzens einer Stahlbramme mit einer abschließenden Austrittstemperatur von 850 °C bis 950 °C, um ein warmgewalztes Stahlblech zu erhalten,
Beginnen eines Kühlens des warmgewalzten Stahlblechs innerhalb einer Sekunde, nachdem das Warmwalzen abgeschlossen wurde,
Vornehmen eines ersten Kühlens bis zu einer ersten Kühlstopptemperatur von 600 °C bis 700 °C mit einer ersten durchschnittlichen Kühlgeschwindigkeit von 80 °C/s oder mehr,
Vornehmen eines zweiten Kühlens bis zu einer zweiten Kühlstopptemperatur von 620 °C oder niedriger mit einer zweiten durchschnittlichen Kühlgeschwindigkeit von 5 °C/s oder mehr,
dann Aufwickeln des warmgewalzten Stahlblechs,
nachfolgend Kaltwalzen, um ein kaltgewalztes Stahlblech zu erhalten, und
Vornehmen eines kontinuierlichen Glühens des kaltgewalzten Stahlblechs,
wobei das kontinuierliche Glühen umfasst:
Erhitzen des Stahlblechs auf eine Temperatur von 250 °C bis 350 °C,
dann Erhitzen des Stahlblechs auf eine Temperatur von 660 °C mit einer ersten durchschnittlichen Erhitzungsgeschwindigkeit von 5 °C/s bis 25 °C/s,
dann Erhitzen des Stahlblechs auf eine Temperatur von 680 °C bis 750 °C mit einer zweiten durchschnittlichen Erhitzungsgeschwindigkeit von 10 °C/s oder weniger,
Halten des Stahlblechs bei einer ersten Haltetemperatur von 680 °C bis 750 °C über 180 Sekunden oder mehr,
dann Vornehmen eines dritten Kühlens bis zu einer dritten Kühlstopptemperatur von 650 °C bis 720 °C mit einer dritten durchschnittlichen Kühlgeschwindigkeit von 1 °C/s oder mehr,
dann Vornehmen eines vierten Kühlens bis zu einer vierten Kühlstopptemperatur von 100 °C oder niedriger mit einer vierten durchschnittlichen Kühlgeschwindigkeit von 100 °C/s bis 1000 °C/s und
nachfolgend Halten des Stahlblechs bei einer zweiten Haltetemperatur von 100 °C bis 250 °C über 120 Sekunden bis 1800 Sekunden.

## Revendications

1. Tôle d'acier laminée à froid à haute résistance ayant
une composition chimique contenant, en % en masse, C : 0,16 % à 0,30 %, Si : 1,2 % à 2,2 %, Mn : 1,5 % à 2,5 %, P : 0,05 % ou moins, S : 0,005 % ou moins, Al : 0,10 % ou moins, N : 0,007 % ou moins, au moins un de Ti et Nb, facultativement B : 0,010 % ou moins, facultativement un ou plusieurs choisis parmi V : 0,50 % ou moins, Cr : 0,50 % ou moins, Mo : 0,50 % ou moins, Cu : 0,50 % ou moins, Ni : 0,50 % ou moins, Ca : 0,0050 % ou moins, et REM : 0,0050 % ou moins, et le reste étant du Fe et des impuretés inévitables, dans laquelle Ti + Nb est 0,04 % à 0,15 %, et
une microstructure multiphase comprenant de la ferrite ayant un diamètre moyen de grain de cristal de 2,5 µm ou moins en une quantité de 45 % à 65 % en termes de fraction volumique, de la martensite trempée ayant un diamètre de grain de cristal moyen de 2 µm ou moins en une quantité de 35 % à 55 % en termes de fraction volumique, et de la ferrite non recristallisée ayant un diamètre de grain de cristal moyen de 5 µm ou moins en une quantité de 5 % ou moins en termes de fraction volumique,
la tôle d'acier laminée à froid haute résistance ayant une résistance à la traction de 1 150 MPa ou plus et un allongement de 15,0 ou plus,
dans laquelle les diamètres de grains de cristal moyens de ferrite, de martensite trempée et de ferrite non recristallisée sont déterminés en calculant les diamètres de cercle équivalent de ces phases à partir d'une photographie de microstructure de tôle d'acier et en calculant les valeurs moyennes des diamètres de cercle équivalent.

2. Procédé de fabrication d'une tôle d'acier laminée à froid haute résistance selon la revendication 1, le procédé comprenant les étapes consistant à :
effectuer un laminage à chaud sur une brame d'acier avec une température de livraison de finition de 850°C à 950°C afin d'obtenir une tôle d'acier laminée à chaud,
commencer un refroidissement sur la tôle d'acier laminée à chaud une seconde ou moins après la fin du laminage à chaud,
effectuer un premier refroidissement jusqu'à une première température d'arrêt de refroidissement de 600°C à 700°C à une première vitesse de refroidissement moyenne de 80°C/s ou plus,
effectuer un deuxième refroidissement jusqu'à une deuxième température d'arrêt de refroidissement de 620°C ou moins à une seconde vitesse de refroidissement moyenne de 5°C/s ou plus,
puis enrouler la tôle d'acier laminée à chaud,
puis laminer à froid pour obtenir une tôle d'acier laminée à froid, et
effectuer un recuit continu de la tôle d'acier laminée à froid,
le recuit continu comprenant les étapes consistant à
chauffer la tôle d'acier jusqu'à une température de 250°C à 350°C,
puis chauffer la tôle d'acier jusqu'à une température de 660°C à une première vitesse de chauffe moyenne de 5°C/s à 25°C/s,
puis chauffer la tôle d'acier jusqu'à une température de 680°C à 750°C à une seconde vitesse de chauffe moyenne de 10°C/s ou moins,
maintenir la tôle d'acier à une première température de trempe de 680°C à 750°C pendant 180 secondes ou plus,
puis effectuer un troisième refroidissement jusqu'à une troisième température d'arrêt de refroidissement de 650°C à 720°C à une troisième vitesse de refroidissement moyenne de 1°C/s ou plus,
puis effectuer un quatrième refroidissement jusqu'à une quatrième température d'arrêt de refroidissement de 100°C ou moins à une quatrième vitesse de refroidissement moyenne de 100°C/s à 1 000°C/s, et
maintenir ensuite la tôle d'acier à une seconde température de trempe de 100°C à 250°C pendant 120 secondes à 1 800 secondes.
